# FASCICULE DE BREVET EUROPEEN

(11) **EP 1 381 873 B1**
(45) Date de publication et mention de la délivrance du brevet: **03.06.2009**
(21) Numéro de dépôt: 02735463.8
(22) Date de dépôt: 19.04.2002
(51) Int. Cl.: G01P 5/165, G01P 13/02, B64D 43/02

(54) **DISPOSITIF DE MESURE DE LA PRESSION TOTALE D'UN ECOULEMENT**
GESAMTDRUCK-STRÖMUNGSMESSVORRICHTUNG
DEVICE FOR MEASURING TOTAL PRESSURE OF A FLOW

(30) Priorité: 24.04.2001 FR 0105508
(43) Date de publication de la demande: 21.01.2004
(73) Titulaire: Thales, 92200 Neuilly Sur Seine (FR)
(72) Inventeur: CHOISNET, Joel, Thales Intellectual Property, 94117 Arcueil Cedex (FR)
(74) Mandataire: Collet, Alain
(86) Numéro de dépôt international: PCT/FR2002/001355
(87) Numéro de publication internationale: WO 2002/086516

(56) Documents cités:
- US-A- 3 415 120
- US-A- 4 275 603

## Description

L'invention se rapporte à un dispositif, de mesure de la pression totale d'un écoulement.

Le pilotage de tout aéronef nécessite de connaître sa vitesse relative par rapport à l'air, c'est-à-dire au vent relatif. Cette vitesse est déterminée à l'aide de capteurs de la pression statique Ps, de la pression totale Pt, de l'angle d'incidence α et de l'angle de dérapage β. α et β fournissent la direction du vecteur de vitesse dans un système de référence, ou référentiel, lié à l'aéronef et (Pt - Ps) fournit le module de ce vecteur vitesse. Les quatre paramètres aérodynamiques permettent donc de déterminer le vecteur vitesse d'un avion et, accessoirement, d'un aéronef à rotor basculant dit convertible.

La mesure de la pression totale Pt se fait habituellement à l'aide d'un tube dit de Pitot. Il s'agit d'un tube ouvert à l'une de ses extrémités et obstrué à l'autre. L'extrémité ouverte du tube fait sensiblement face à l'écoulement.

A l'intérieur du tube de Pitot, au voisinage de l'extrémité obstruée, on dispose un moyen de mesure de la pression d'air qui y règne. Le filet d'air pénétrant dans le tube par l'extrémité ouverte du tube est progressivement ralenti jusqu'à atteindre une vitesse nulle dans le tube. Le ralentissement de la vitesse de l'air tend à augmenter la pression de l'air. Cette pression augmentée forme la pression totale Pt de l'écoulement d'air.

En pratique, l'écoulement d'air peut véhiculer des particules solides ou liquides susceptibles de pénétrer dans le tube de Pitot et de s'accumuler dans le tube au niveau de l'extrémité obstruée. Pour éviter qu'une telle accumulation ne vienne perturber la mesure de pression, on prévoit en général au niveau de l'extrémité obstruée, un trou de purge par lequel les éventuelles particules peuvent s'évacuer.

Dans ce trou, circulent à la fois les particules et une partie de l'air entrée dans le tube de Pitot. Ainsi, le ralentissement de l'air dans le tube n'est pas complet et la mesure de pression totale Pt s'en trouve altérée. Plus précisément, plus on cherche à éviter l'accumulation de particules de taille importante, plus on altère la mesure de pression totale en augmentait les dimensions du trou de purge.

Inversement, plus on cherche à améliorer la mesure de pression totale Pt en diminuant les dimensions du trou de purge, plus le risque d'accumulation de particules augmente.

Avec un tube de Pitot, on est donc tenu de réaliser un compromis entre qualité de la mesure de pression totale Pt et risque de perturbation de la mesure du fait de particules véhiculées par l'écoulement d'air où la mesure est réalisée.

Le document US-A-4 275 603 divulgue un dispositif de mesure de la pression totale d'un écoulement, ledit dispositif de mesure comprenant deux filets de fluide prélevés dans l'écoulement.

L'invention a pour but d'éviter ce compromis en réalisant une mesure suffisante de la pression totale sans risque d'accumulation de particules.

Il est bien entendu que l'invention n'est pas limitée à une mesure de pression totale réalisée dans un écoulement d'air. L'invention peut être mise en oeuvre pour tout type d'écoulement fluide.

Pour atteindre ce but, l'invention a pour objet un dispositif de mesure de la pression totale d'un écoulement, caractérisé en ce qu'au moins deux filets de fluide prélevés dans l'écoulement sont amenés en contact de manière à se ralentir mutuellement dans une zone, et en ce qu'il comporte des moyens de mesure de la pression régnant dans ladite zone.

L'invention sera mieux comprise et d'autres avantages apparaîtront à la lecture de la description détaillée de plusieurs modes de réalisation de l'invention, modes de réalisation illustrés par le dessin joint dans lequel :

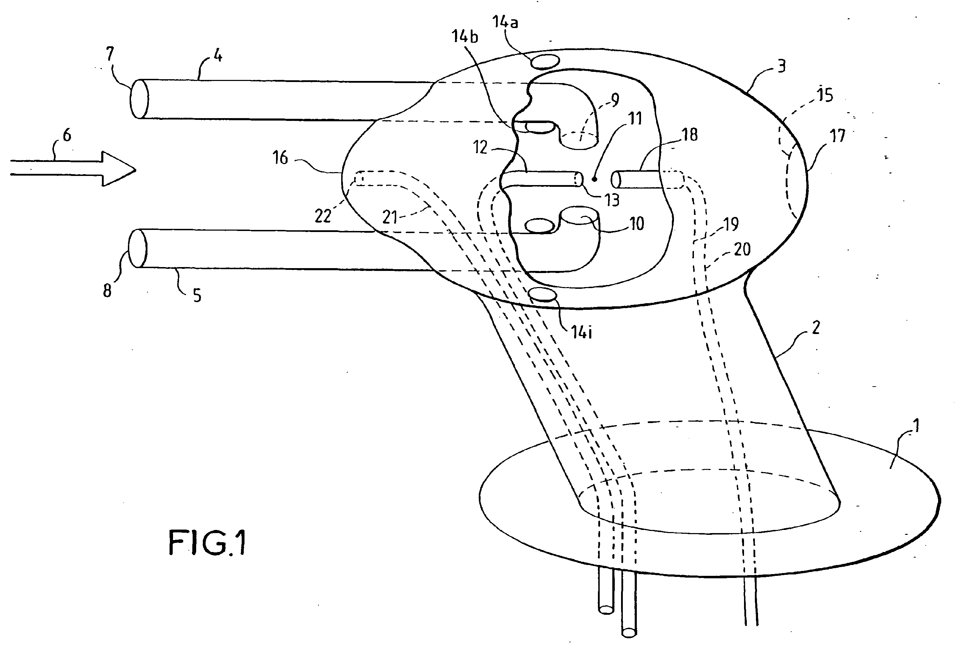

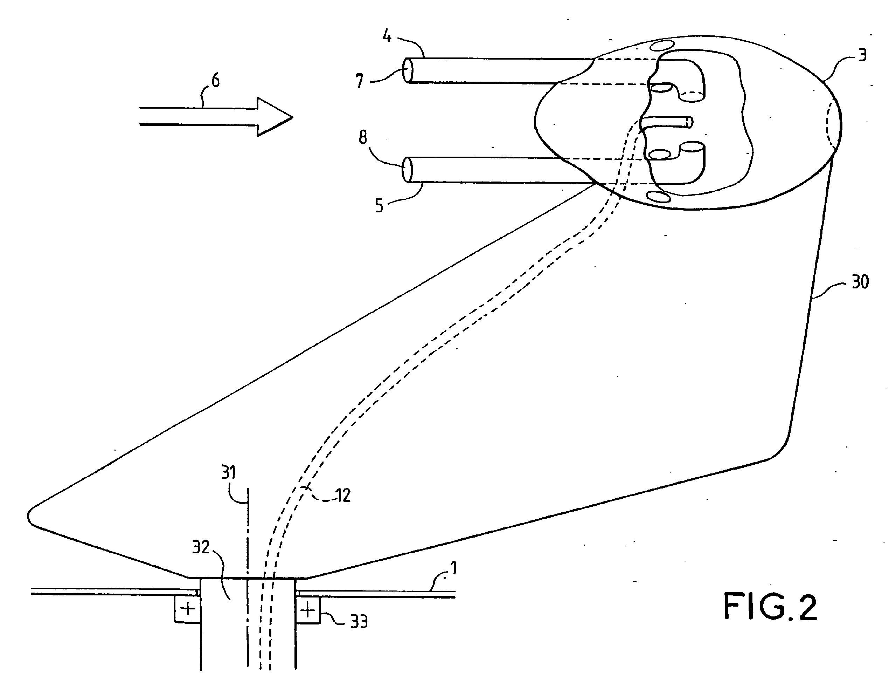

- les figures 1 et 2 représentent un premier mode de réalisation dans lequel deux filets d'air sont canalisés et amenés en contact l'un de l'autre ; plus précisément, la figure 1 représente un dispositif conforme à l'invention placé sur une sonde fixe par rapport à la peau d'un aéronef ; la figure 2 représente le même dispositif que celui représenté figure 1 mais placé cette fois sur une sonde mobile par rapport à la peau de l'aéronef ;

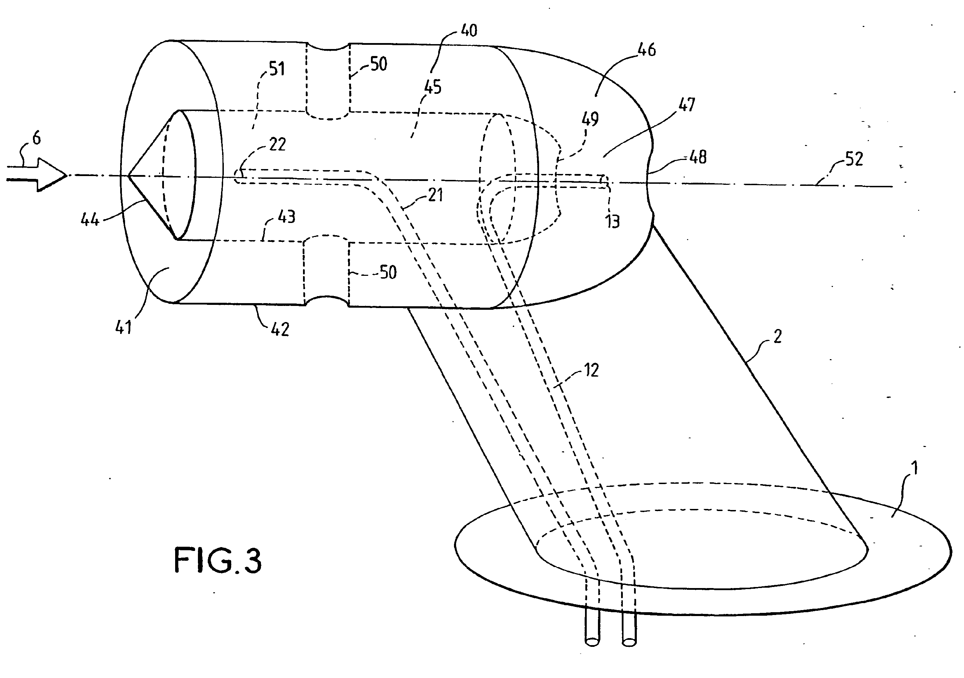

- la figure 3 représente un second mode de réalisation dans lequel plusieurs filets d'air sont prélevés de façon annulaire dans l'écoulement puis amenés en contact.

La figure 1 représente un dispositif conforme à l'invention, dispositif dont la position est fixe par rapport à la peau 1 d'un aéronef sur lequel il est disposé. Le dispositif est fixé sur un mât 2 le rendant solidaire de la peau 1. Le dispositif comporte un corps creux,3 et deux canaux tubulaires 4 et 5. Le dispositif est situé dans un écoulement d'air dont l'axe est représenté par la flèche 6. Les canaux 4 et 5 comportent chacun une extrémité ouverte amont, respectivement 7 et 8. Au voisinage de ces extrémités, les canaux 4 et 5 s'ouvrent sensiblement suivant l'axe 6 de l'écoulement. Au voisinage de leur extrémité amont 7, 8, les canaux 4 et 5 sont sensiblement parallèles. Les canaux 4 et 5 comportent chacun une extrémité ouverte avale, respectivement 9 et 10. A l'intérieur du corps creux 3, les extrémités 9 et 10 se font face et une zone 11 est située entre les extrémités 9 et 10. Deux filets d'air prélevés dans l'écoulement sont guidés par les canaux 4 et 5 en amont de la zone 11. Dans la zone 11, les deux filets d'air sont amenés en contact, de telle sorte à se ralentir mutuellement.

La pression de l'air régnant dans la zone 11 est représentative de la pression totale Pt régnant dans l'écoulement. On mesure cette pression Pt par exemple au moyen d'un tube 12 débouchant à sa première extrémité 13 dans la zone 11. Le tube 12 est raccordé à sa seconde extrémité à des moyens de mesure de la pression tels que par exemple un capteur de pression. Ce capteur de pression peut être situé à l'intérieur de l'aéronef, auquel cas, le tube 12 s'étend depuis l'intérieur du corps creux 3 jusqu'à l'intérieur de l'aéronef en passant à l'intérieur du mât 2.

Le corps creux 3 comporte des orifices 14a à 14i ainsi que 15 permettant d'évacuer les filets d'air du corps creux 3. Ces orifices 14a à 14i ainsi que 15 sont positionnés sur le corps creux 3 de telle sorte que lorsque les canaux 4 et 5 sont obstrués, une pression sensiblement égale à la pression statique Ps de l'écoulement règne à l'intérieur du corps creux 3.

Plus précisément, dans l'exemple représenté sur la figure 1, le corps creux 3 a une forme sensiblement de révolution et allongé suivant un axe sensiblement parallèle à l'axe 6 de l'écoulement.

A son extrémité amont 16, le corps creux à une section (perpendiculairement à l'axe 6) relativement faible. En s'éloignant de l'extrémité amont 16, la section du corps creux 3 va en s'élargissant jusqu'à un maximum puis en s'amincissant jusqu'à une extrémité avale 17 du corps creux 3. La zone 11 dans laquelle on mesure la pression totale Pt est située à l'intérieur du corps creux 3 sensiblement au niveau où la section du corps creux 3 est la plus large. Les orifices 14a à 14i sont situés sur la peau du corps creux 3 également sensiblement au niveau où la section est la plus large. Les orifices 14a à 14i entourent la zone 11. L'orifice 15 est, quant à lui, situé au niveau de l'extrémité avale 17 du corps creux 3.

Avantageusement, le dispositif comporte des moyens de mesure de la température régnant dans la zone 11. Par exemple, on peut disposer dans la zone 11, une sonde de température sous la forme d'une résistance de platiné 18. Cette résistance est raccordée par des liaisons électriques 19 et 20 à des moyens de mesure de résistance électrique, moyens par exemple situés dans l'aéronef. Tout comme le tube 12, les liaisons électriques peuvent cheminer à l'intérieur du mât 2.

La température régnant dans la zone 11 est représentative de la température totale de l'écoulement. Dans la zone 11, les filets d'air sont suffisamment ralentis pour permettre une mesure de la température totale. En revanche, l'air ralenti est en permanence renouvelé par l'air circulant dans les canaux 4 et 5 puis évacué par les orifices 14a à 14i et 15, de telle sorte que la résistance 18 est léchée par un léger flux d'air. Ainsi la résistance 18 ne s'échauffe pas ou peu par effet Joule, et permet une bonne mesure de température du fait de cette convection forcée.

Avantageusement, les dimensions du dispositif sont telles que la zone 11 est située hors de toute couche limite. Plus précisément, la mesure de pression est perturbée si la prise de pression, en l'occurrence l'extrémité 13 du tube 12 se situe dans une couche limite. On rappelle qu'une couche limite est une zone dans laquelle un écoulement est perturbé par une paroi. Par exemple, le mât 2 doit avoir une longueur suffisante pour que les extrémités 7 et 8 des canaux 4 et 5 ne soient pas situées dans la couche limite formée par la peau 1 de l'aéronef. De plus, les parois des canaux 4 et 5 forment à l'intérieur de ceux-ci une couche limite se formant lorsque des filets d'air de l'écoulement circulent à l'intérieur des canaux 4 et 5. Il est donc important de définir les dimensions des canaux 4 et 5 pour qu'une couche limite s'y formant n'envahisse pas toute la section des canaux 4 et 5 au niveau de leurs extrémités avales 9 et 10, afin de conserver la zone 11 hors de toute couche limite. On veillera plus particulièrement au rapport entre la longueur et la section des canaux 4 et 5 ainsi qu'au rayon de courbure des canaux 4 et 5, courbure permettant d'amener en contact les filets d'air circulant dans les canaux 4 et 5. Ce rayon de courbure ne devra pas être trop faible.

Avantageusement, il est également possible de mesurer à l'intérieur du corps creux 3, par exemple au voisinage de son extrémité amont 16, la pression statique Ps de l'écoulement. A cet effet, on peut mesurer la pression statique à l'aide d'un tube 21 dont une première extrémité 22 débouche dans une zone située à l'intérieur du corps creux 3 où règne une pression représentative de la pression statique Ps. Le tube 21 est raccordé à sa seconde extrémité à des moyens de mesure de pression tels que par exemple un capteur de pression. Ce capteur peut être situé à l'intérieur de l'aéronef auquel cas, le tube 21 s'étend depuis le corps creux 3 jusqu'à l'intérieur de l'aéronef en passant à l'intérieur du mât 2.

Dans le mode de réalisation représenté sur la figure 1, les deux canaux 4 et 5 forment sensiblement un plan perpendiculaire à la peau 1 de l'aéronef. Il est bien entendu possible que le plan contenant les canaux 4 et 5 ait une toute autre orientation par rapport à la peau 1 de l'aéronef. Le plan contenant les canaux 4 et 5 peut être sensiblement parallèle à la peau de l'aéronef. Cette orientation permet de réduire l'encombrement du dispositif qui ainsi sera moins proéminent par rapport à la peau 1 de l'aéronef. On peut déterminer la distance du plan contenant les canaux 4 et 5 par rapport à la peau de l'aéronef de façon à ce qu'il soit hors de la couche limite formée par l'écoulement le long de la peau 1 de l'aéronef.

Par contre, lorsque les deux canaux 4 et 5 forment sensiblement un plan perpendiculaire à la peau 1 de l'aéronef, une variation d'incidence locale de l'écoulement entraînera des perturbations identiques pour les deux canaux 4 et 5. Une telle variation n'entraînera donc pas de défaut de symétrie dans la position de la zone 11. En revanche, lorsque les deux canaux 4 et 5 forment sensiblement un plan parallèle à la peau 1 de l'aéronef, une variation d'incidence locale risque d'entraîner une perturbation du flux d'air pénétrant dans un des canaux 4 ou 5, perturbation qui est due à la présence de l'autre canal. On rappelle qu'une variation d'incidence locale est une variation de la direction du vecteur vitesse de l'écoulement, variation de direction de l'axe 6, dans un plan parallèle à celui de la peau 1 de l'aéronef.

La figure 2 représente un autre mode de réalisation de l'invention dans lequel les canaux 4 et 5, solidaires du corps creux 3, ont une position mobile par rapport à la peau 1 de l'aéronef. Pour la disposition du corps creux 3 et des canaux 4 et 5, on pourra se reporter à la figure 1. Sur la figure 2, le corps creux 3 est fixé sur une palette 30 mobile autour d'un axe 31. La palette 30 est destinée à s'orienter naturellement en fonction de l'incidence locale de l'écoulement. La palette 30 est solidaire d'un arbre 32 sensiblement perpendiculaire à la peau 1 de l'aéronef. Un palier 33, par exemple à roulement, permet une rotation facile de l'arbre 32 par rapport à la peau 1 de l'aéronef tout en assurant un positionnement précis suivant les degrés de liberté autres que la rotation autour de l'axe 31.

Lorsque le capteur de pression relié au tube 12 est situé à l'intérieur de la peau 1 de l'aéronef, il est avantageux d'interposer entre le tube 12 et le capteur un joint tournant (non représenté sur la figure 2) afin de conserver le capteur de pression dans une position fixe par rapport à l'aéronef.

Le dispositif représenté figure 2 peut également comporter une prise de pression apte à mesurer une pression représentative de la pression statique Ps de l'écoulement et un capteur de température pour mesurer la température totale de l'écoulement tel que représenté à la figure 1. Pour raccorder la prise de pression statique et le capteur de température, le joint tournant pourra disposer de plusieurs voies, voies aéroliques pour les mesures de pression et voie électrique pour la mesure de température.

Avantageusement lorsque la palette 30 s'oriente dans l'axe de l'écoulement, il est possible de mesurer l'orientation de la palette par exemple au moyen d'un codeur optique mesurant l'angle de la palette 30, on peut asservir mécaniquement la position de la palette 30 en fonction de mesures de pression d'incidence de la palette 30 par rapport à l'écoulement. Pour plus de détails concernant la réalisation d'une mesure de position angulaire de la palette 30 autour de l'axe 31, on peut se reporter à la demande de brevet français FR 2 665 539.

Le fait d'orienter les canaux 4 et 5 suivant l'axe 6 de l'écoulement, même lorsque cet axe 6 varie par rapport à l'aéronef, permet d'améliorer la mesure de pression représentative de la pression totale Pt réalisée par le dispositif. En effet, lorsque l'axe 6 s'incline par rapport à l'orientation des canaux 4 et 5 au voisinage de leur extrémité ouverte amont 7 et 8, il peut se former à l'intérieur des canaux, 4 et 5 une couche limite d'autant plus importante que l'inclinaison de l'axe 6 par rapport aux canaux 4 et 5 est grande. Cette couche limite peut perturber la mesure de pression.

Dans le mode de réalisation représenté figure 3, plusieurs filets d'air sont prélevés annulairement dans l'écoulement et guidés dans un même canal 40. Plus précisément, au voisinage de son extrémité ouverte amont 41 le canal 40 a une forme sensiblement tubulaire. Le canal 40 est situé entre une paroi cylindrique extérieure 42 et par une paroi cylindrique intérieure 43. Au niveau de l'extrémité 41, la paroi cylindrique intérieure 43 est fermée par exemple par une surface conique 44 délimitant un volume intérieur 45 dont on verra la fonction ultérieurement. Le canal 40 au voisinage de son extrémité avale 46 se referme autour d'une zone 47 ou les différents filets d'air circulant dans le canal 40 sont amenés en contact de sorte à se ralentir mutuellement.

Le canal 40 comporte à son extrémité avale 46 des orifices 48 et 49 permettant à l'air de s'évacuer de la zone 47. L'orifice 48 est situé dans le prolongement de la paroi extérieure 42 et permet aux filets d'air de s'évacuer de la zone 47 directement dans l'écoulement dans la direction de l'axe 6. L'orifice 49 est situé dans le prolongement de la paroi intérieure 43 et permet aux filets d'air de s'évacuer de la zone 47 dans la direction opposée à celle de l'axe 6. Les filets d'air évacués par l'orifice 49 débouchent dans le volume intérieur 45. Le volume intérieur 45 communique avec l'écoulement au moyen de canaux radiaux 50 traversant le canal 40. Sur la figure 3, seulement deux canaux radiaux sont représentés. Il est bien entendu que l'invention n'est pas limitée à ce nombre. Ce ou ces canaux radiaux 50 permettent en outre la tenue mécanique de la paroi intérieure 43. Ils doivent avoir une section suffisante pour permettre l'évacuation de filets d'air en provenance de l'orifice 49 vers l'écoulement d'air extérieur au dispositif. Le ou les canaux radiaux 50 ne doivent pas avoir une section trop importante car celle-ci perturbe la circulation des filets d'air dans le canal 40.

Comme dans les modes de réalisation représentés à l'aide des figures 1 et 2, l'orifice 13 d'un tube 12 permet de réaliser une prise de pression dans la zone 47. La paroi extérieure 42 est solidaire du mât 2 à l'intérieur duquel s'étend le tube 12. De même, une autre prise de pression peut être prévue pour mesurer une pression représentative de la pression statique Ps de l'écoulement. On a constaté qu'on peut mesurer une telle pression dans le volume intérieur 45 dans un espace 51 situé entre la surface conique 44 et le ou les canaux radiaux 50. L'extrémité 22 du tube 21 est placé à cet effet dans l'espace 51. Il est également possible de prévoir des moyens de mesure de la température régnant dans la zone 47. Pour ne pas surcharger la figure, ces moyens ne sont pas représentés sur la figure 3. Ils peuvent prendre la forme du capteur de température 17 représenté figure 1.

Le canal 40 formé entre les parois 42 et 43 a été représenté en positon fixe par rapport à la peau 1 de l'aéronef. Il est également possible, comme dans le mode de réalisation représenté figure 2, de fixer le canal 40 sur une palette mobile 30 afin d'améliorer l'alignement du canal 40 par rapport à l'axe 6 de l'écoulement lorsque l'aéronef modifie sa direction par rapport à l'axe 6 de l'écoulement.

Le mode de réalisation représenté figure 3 présente avantageusement une symétrie de révolution autour d'un axe 52 orienté selon l'axe préférentiel de l'écoulement d'air, axe représenté par la flèche 6.

Le mode de réalisation représenté figure 3 présente l'avantage d'être plus compact que les modes de réalisation représentés sur les figures 1 et 2. Plus le mode de réalisation est compact, plus le réchauffage du dispositif nécessaire pour éviter la formation de givre, en cas de vol en haute altitude, est facile à réaliser. Pour le réchauffage, on peut par exemple utiliser des résistances électriques intégrées aux parois 42 ou 43 notamment la paroi extérieure 42. Plus le mode de réalisation est compact, moins la puissance électrique nécessaire au réchauffage sera grande.

## Revendications

1. Dispositif de mesure de la pression totale (Pt) d'un écoulement, **caractérisé en ce qu'**au moins deux filets de fluide prélevés dans l'écoulement sont amenés en contact de manière à se ralentir mutuellement dans une zone (11), et **en ce qu'**il comporte des moyens de mesure (12) de la pression régnant dans ladite zone (11).

2. Dispositif selon la revendication 1, **caractérisé en ce que** les filets de fluide sont guidés dans au moins un canal (4, 5 ; 40) et **en ce que** le canal (4, 5 ; 40), au voisinage de son extrémité ouverte amont (7, 8) est sensiblement orienté dans l'axe (6) de l'écoulement.

3. Dispositif selon la revendication 2, **caractérisé en ce que** deux filets d'air prélevés dans l'écoulement sont guidés en amont de ladite zone (11) chacun dans un canal (4, 5).

4. Dispositif selon la revendication 3, **caractérisé en ce que** les canaux (4, 5), au voisinage de leur extrémité amont (7, 8), sont sensiblement parallèles.

5. Dispositif selon l'une quelconque des revendications 3 ou 4, **caractérisé en ce que** les canaux (4, 5) comportent chacun une extrémité ouverte avale (9, 10), **en ce que** les extrémités ouvertes avales (9, 10) se font face, et **en ce que** ladite zone (11) est située entre les extrémités ouvertes avales (9, 10).

6. Dispositif selon l'une quelconque des revendications 3 à 5, **caractérisé en ce que** ladite zone (11) est située dans un corps creux (3) à l'intérieur duquel aboutissent les deux canaux (4, 5), **en ce que** le corps creux (3) comporte des orifices (14a à 14i, 15), permettant d'évacuer les filets de fluide du corps creux (3).

7. Dispositif selon la revendication 6, **caractérisé en ce que** les orifices (14a à 14i, 15) du corps creux (3) sont positionnés de telle sorte que lorsque les canaux (4, 5) sont obstrués, une pression sensiblement égale à la pression statique (Ps) de l'écoulement règne à l'intérieur du corps creux (3).

8. Dispositif selon la revendication 1, **caractérisé en ce que** plusieurs filets de fluide sont prélevés annulairement dans l'écoulement et guidés dans un même canal (40).

9. Dispositif selon la revendication 8, **caractérisé en ce que** le canal (40), au voisinage de son extrémité amont (41), a une forme sensiblement tubulaire.

10. Dispositif selon l'une quelconque des revendications 8 ou 9, **caractérisé en ce que** le canal, au voisinage de son extrémité avale, se referme autour de ladite zone (47).

11. Dispositif selon l'une quelconque des revendications 8 à 10, **caractérisé en ce que** le canal (40) comporte à son extrémité aval (46) des orifices (48, 49) permettant au fluide de s'évacuer de ladite zone (47).

12. Dispositif selon l'une quelconque des revendications 2 à 11, **caractérisé en ce que** le canal (4, 5 ; 40) a une position fixe par rapport à la peau (1) d'un aéronef.

13. Dispositif selon l'une quelconque des revendications 2 à 11, **caractérisé en ce que** le canal (4, 5 ; 40) est solidaire de moyens destinés à s'orienter dans l'axe (6) de l'écoulement.

14. Dispositif selon l'une des revendications précédentes, **caractérisé en ce que** les dimensions du dispositif sont telles que ladite zone (11, 47) est située hors de toute couche limite.

15. Dispositif selon l'une des revendications précédentes, **caractérisé en ce qu'**il comporte des moyens de mesure (18, 19, 20) de la température régnant dans ladite zone (11 ; 47).

## Claims

1. Device for measuring the total pressure (Pₜ) of a flow, **characterized in that** at least two fluid streams taken off from the flow are brought into contact with each other so as to be mutually slowed down in a region (11) and **in that** it includes means (12) for measuring the pressure within said region (11).

2. Device according to Claim 1, **characterized in that** the fluid streams are guided in at least one channel (4, 5; 40) and **in that** the channel (4, 5; 40), near its upstream open end (7, 8), is approximately oriented along the axis (6) of the flow.

3. Device according to Claim 2, **characterized in that** two airstreams taken off from the flow are guided upstream of said region (11), each in a channel (4, 5).

4. Device according to Claim 3, **characterized in that** the channels (4, 5) near their upstream end (7, 8) are approximately parallel.

5. Device according to either of Claims 3 and 4, **characterized in that** the channels (4, 5) each have a downstream open end (9, 10), **in that** the downstream open ends (9, 10) face each other and **in that** said region (11) is located between the downstream open ends (9, 10).

6. Device according to any one of Claims 3 to 5, **characterized in that** said region (11) is located in a hollow body (3) into which the two channels (4, 5) run and **in that** the hollow body (3) includes orifices (14a to 14i, 15) for discharging the fluid streams from the hollow body (3).

7. Device according to Claim 6, **characterized in that** the orifices (14a to 14i, 15) of the hollow body (3) are positioned in such a way that, when the channels (4, 5) are obstructed, a pressure approximately equal to the static pressure (Pₛ) of the flow obtains within the hollow body (3).

8. Device according to Claim 1, **characterized in that** several fluid streams are taken off annularly from the flow and guided in one and the same channel (40).

9. Device according to Claim 8, **characterized in that** the channel (40), near its upstream end (41), has an approximately tubular shape.

10. Device according to either of Claims 8 and 9, **characterized in that** the channel, near its downstream end, closes up around said region (47).

11. Device according to any one of Claims 8 to 10, **characterized in that** the channel (40) includes, at its downstream end (46), orifices (48, 49) for discharging the fluid from said region (47).

12. Device according to any one of Claims 2 to 11, **characterized in that** the channel (4, 5; 40) has a position that is fixed relative to the skin (1) of an aircraft.

13. Device according to any one of Claims 2 to 11, **characterized in that** the channel (4, 5; 40) is fastened to means that are designed to be oriented along the axis (6) of the flow.

14. Device according to one of the preceding claims, **characterized in that** the dimensions of the device are such that said region (11, 47) is located away from any boundary layer.

15. Device according to one of the preceding claims, **characterized in that** it includes means (18, 19, 20) for measuring the temperature obtaining in said region (11; 47) .

## Patentansprüche

1. Vorrichtung zum Messen des Gesamtdrucks (Pt) einer Strömung, **dadurch gekennzeichnet, dass** mindestens zwei aus der Strömung entnommene Fluidfäden in Kontakt gebracht werden, um sich gegenseitig in einer Zone (11) zu verlangsamen, und dass sie Mittel (12) zur Messung des in der Zone (11) herrschenden Drucks aufweist.

2. Vorrichtung nach Anspruch 1, **dadurch gekennzeichnet, dass** die Fluidfäden in mindestens einem Kanal (4, 5; 40) geführt werden, und dass der Kanal (4, 5; 40) in der Nähe seines stromaufwärts liegenden offenen Endes (7, 8) im Wesentlichen in der Achse (6) der Strömung ausgerichtet ist.

3. Vorrichtung nach Anspruch 2, **dadurch gekennzeichnet, dass** zwei aus der Strömung entnommene Luftfäden stromaufwärts vor der Zone (11) je in einem Kanal (4, 5) geführt werden.

4. Vorrichtung nach Anspruch 3, **dadurch gekennzeichnet, dass** die Kanäle (4, 5) in der Nähe ihres stromaufwärts liegenden Endes (7, 8) im Wesentlichen parallel sind.

5. Vorrichtung nach einem der Ansprüche 3 oder 4, **dadurch gekennzeichnet, dass** die Kanäle (4, 5) je ein stromabwärts liegendes offenes Ende (9, 10) aufweisen, dass die stromabwärts liegenden offenen Enden (9, 10) einander gegenüberliegen, und dass die Zone (11) sich zwischen den stromabwärts liegenden offenen Enden (9, 10) befindet.

6. Vorrichtung nach einem der Ansprüche 3 bis 5, **dadurch gekennzeichnet, dass** die Zone (11) sich in einem Hohlkörper (3) befindet, in dessen Innerem die zwei Kanäle (4, 5) münden, dass der Hohlkörper (3) Öffnungen (14a bis 14i, 15) aufweist, die es ermöglichen, die Fluidfäden aus dem Hohlkörper (3) zu entfernen.

7. Vorrichtung nach Anspruch 6, **dadurch gekennzeichnet, dass** die Öffnungen (14a bis 14i, 15) des Hohlkörpers (3) so positioniert sind, dass, wenn die Kanäle (4, 5) verstopft sind, ein Druck im Wesentlichen gleich dem statischen Druck (Ps) der Strömung innerhalb des Hohlkörpers (3) herrscht.

8. Vorrichtung nach Anspruch 1, **dadurch gekennzeichnet, dass** mehrere Fluidfäden ringförmig aus der Strömung entnommen und in dem gleichen Kanal (40) geführt werden.

9. Vorrichtung nach Anspruch 8, **dadurch gekennzeichnet, dass** der Kanal (40) in der Nähe seines stromaufwärts liegenden Endes (41) im Wesentlichen rohrförmig ist.

10. Vorrichtung nach einem der Ansprüche 8 oder 9, **dadurch gekennzeichnet, dass** der Kanal sich in der Nähe seines stromabwärts liegenden Endes um die Zone (47) schließt.

11. Vorrichtung nach einem der Ansprüche 8 bis 10, **dadurch gekennzeichnet, dass** der Kanal (40) an seinem stromabwärts liegenden Ende (46) Öffnungen (48, 49) aufweist, die es dem Fluid ermöglichen, sich aus der Zone (47) zu entfernen.

12. Vorrichtung nach einem der Ansprüche 2 bis 11, **dadurch gekennzeichnet, dass** der Kanal (4, 5; 40) eine feste Stellung bezüglich der Haut (1) eines Luftfahrzeugs hat.

13. Vorrichtung nach einem der Ansprüche 2 bis 11, **dadurch gekennzeichnet, dass** der Kanal (4, 5, 40) fest mit Mitteln verbunden ist, die dazu bestimmt sind, sich in der Achse (6) der Strömung auszurichten.

14. Vorrichtung nach einem der vorhergehenden Ansprüche, **dadurch gekennzeichnet, dass** die Abmessungen der Vorrichtung derart sind, dass die Zone (11, 47) sich außerhalb jeder Grenzschicht befindet.

15. Vorrichtung nach einem der vorhergehenden Ansprüche, **dadurch gekennzeichnet, dass** sie Mittel (18, 19, 20) zur Messung der in der Zone (11; 47) herrschenden Temperatur aufweist.
